Europäisches Patentamt

(19) European Patent Office

Office européen des brevets

(11) Publication number: **0 222 941**
**B1**

## (12) EUROPEAN PATENT SPECIFICATION

(45) Date of publication of the patent specification:
28.02.90

(51) Int. Cl.⁴: **F16H 55/56**

(21) Application number: 85307994.5

(22) Date of filing: 04.11.85

(54) Spring-locked variable speed pulley.

(43) Date of publication of application:
27.05.87 Bulletin 87/22

(45) Publication of the grant of the patent:
28.02.90 Bulletin 90/9

(84) Designated Contracting States:
DE GB IT NL

(56) References cited:
EP-A- 0 051 497
EP-A- 0 117 680
DE-A- 1 525 013
DE-A- 1 550 836
GB-A- 2 018 915
US-A- 3 444 749
US-A- 3 861 228

(73) Proprietor: MITSUBOSHI BELTING LTD., No. 1-21,
Hamazoedori 4-Chome Nagata-ku, Kobe-shi Hyogo(JP)

(72) Inventor: Takano, Hiroshi, No. 2-543, Higashi-jiyugaoka
Shijimicho, Miki-shi Hyogo(JP)

(74) Representative: Jackson, Peter Arthur et al, GILL
JENNINGS & EVERY 53-64 Chancery Lane, London
WC2A 1HN(GB)

ACTORUM AG

## Description

This invention relates to a variable-speed pulley, and more particularly to a spring-locked speed change pulley for use, for example, as a drive device in an automobile, a motorcycle, an agricultural machine, or an industrial machine.

Recently, a variety of variable-speed pulleys have been disclosed, for example in Japanese Published Utility Model Application No. 35421/1977, Japanese Laid-Open Utility Model Application (Kokai) No. 122847/1984, and Japanes Laid-Open Patent Application (Kokai) No. 79355/1982. In these variable-speed pulleys, a pair of V-shaped pulley parts are mounted on a shaft in such a manner that either one or both of the two pulley parts are rotatable around the shaft and are movable along the shaft. A stop member is fixedly mounted on the shaft, located adjacent the or each movable pulley part. A coil spring is interposed between the or each movable pulley part and the adjacent stop member to absorb the torque which is developed during operation of the pulley. With this arrangement, even under severe operating conditions, the variation in the effective diameter of the variable-speed pulley employed as the drive or driven pulley, and the belt tension established by an associated tension pulley or idler are automatically, effectively and positively adjusted.

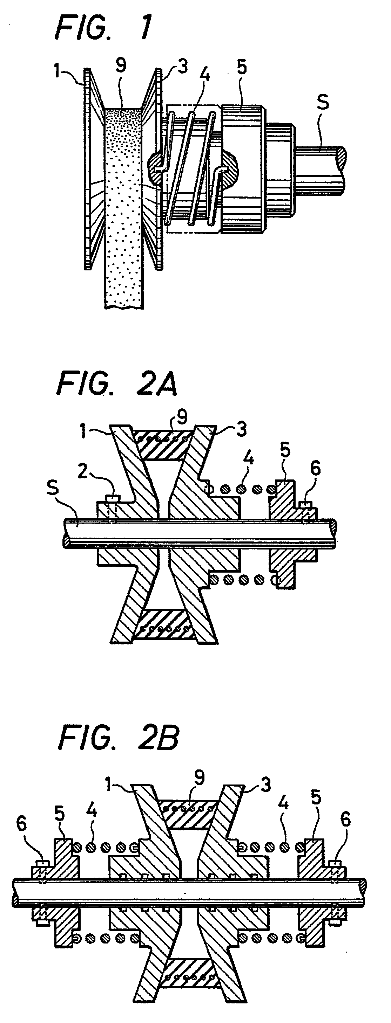

In the variable-speed pulley disclosed in Japanese Published Utility Model Application No. 35421/1977, as shown in Figure 1 herein, a coil spring 4 is wound during manufacture in the same direction as it is wound as the pulley rotates. Both ends of the spring are bent and engaged with holes formed in the movable pulley part 3 and a flange of a stop member 5 provided alongside the movable pulley part. Accordingly, when the movable pulley part is rotated repetitively in the forward and reverse directions by the variations in torque, the ends of the spring may be broken.

In the variable-speed pulley disclosed in Japanese Laid-Open Patent Application No. 79355/1982, as shown in Figure 2A herein, the ends of the spring 4 are fitted in tapered grooves in the pulley part 3 and the stop member 5. Similarly, in the variable-speed pulleys disclosed in Japanese Laid-Open Utility Model Application No. 122847/1984, as shown in Figures 2B, 3A and 3B herein, and in european Patent Application Publication No. EP-A 0 117 680 acknowledged in the preamble of the present independent claim, the ends of the spring 4 are abutted against protrusions in the form of pins. Therefore, in these variable-speed pulleys, unlike the above-described ones, the ends of the spring will not be broken by repetitive forward and revers rotation. However, because the spring is only unwound, it cannot transmit torque developed between the stop member 5 and the movable pulley part 3 in both the forward and reverse directions. Hence, those variable-speed pulleys also suffer from the disadvantage that they have a very limited range of application.

An object of the present invention is to provide an improved variable-speed pulley which has a wide range of application and, more specifically, to improve the way in which the spring is engaged with the confronting sides of the or each stop member and the or each movable pulley part.

According to the invention, there is provided a variable-speed pulley comprising two confronting pulley parts mounted on a shaft, at least one of the pulley parts being mounted on the shaft to be movable in an axial direction of the shaft and to be rotatable around the shaft; and, associated with the or each movable pulley part, a respective stop member fixedly mounted on the shaft, and a coil spring interposed between the movable pulley part and the stop member; the or each movable pulley part and the or each stop member having a respective pin protruding from confronting sides thereof and engaging with a respective end of the or each coil spring; characterised in that the or each coil spring has a hole through each of its ends into which a respective one of the pins is inserted whereby, in operation, when a belt drives, or is driven by, the pulley, so that the coil spring is rotated in a direction in which it is wound or in the direction opposite thereto, a torque in either direction is withstood.

In the operation of this variable-speed pulley, a load caused by a belt driving or driven by the pulley turning in either direction can be withstood.

The coil spring may be circular in section, but it is also possible to use a coil spring of rectangular section because the ends of the spring where the holes are located can have a large effective spring height.

The pins protruding from the stop member and the movable pulley part are inserted into the holes in the ends of the coil spring. Thus, in the case where the coil spring, in use, is turned in the opposite direction to that in which it was wound during manufacture, the torque developed between the movable pulley part and the stop member is satisfactorily withstood and transmitted, and also in the case where the coil spring is turned in the same direction as that in which it was wound. Furthermore, as the coil spring has no bent parts, the likelihood of breakage of the coil spring is much reduced.

Embodiments of the invention will now be described, by way of example, with reference to the accompanying drawings, in which:

Figures 1, 2A, 2B, 3A and 3B are cross-sectional views of conventional speed change pulleys, as described above;

Figures 4 and 5 are perspective views showing components of variable-speed pulleys of the present invention; and

Figures 6A and 6B are cross-sectional views of two examples of variable-speed pulleys according to the present invention.

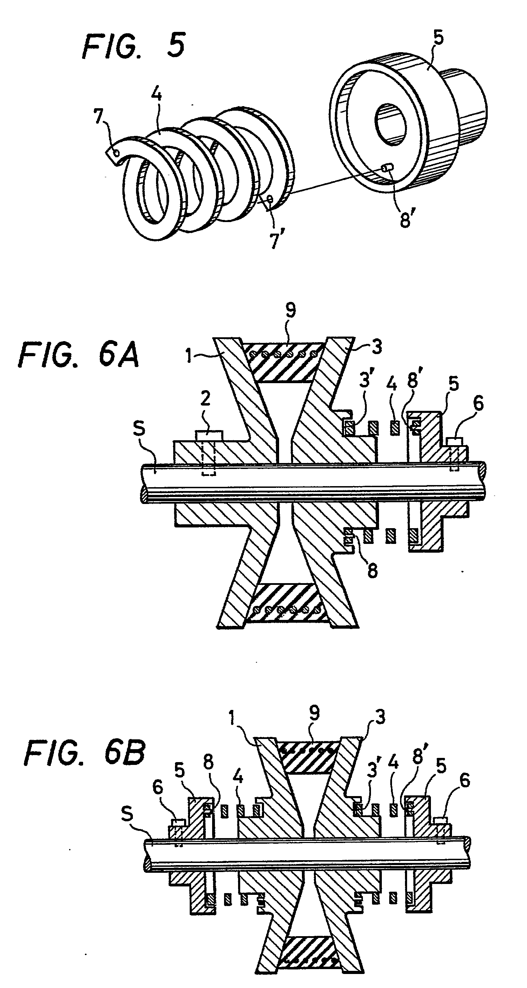

A variable-speed pulley constructed according to the present invention is shown in Figure 6A. The pulley is shown in its normal operating state with a V-belt 9 laid therearound. The pulley comprises a fixed pulley part 1 which is mounted on a shaft S and is locked thereto by a screw 2. A movable pulley part 3 is mounted on the shaft confronting the stationary pulley part 1. More specifically, the movable pulley part 3 is mounted on the shaft S in such a manner that it is rotatable relative to the shaft, and it is movable in the direction of thrust, i.e. in the axial direction of the shaft.

An annular groove 3' is formed in the base of a boss protruding from the movable pulley part 3. On the right-hand side of the movable pulley part 3, a flanged stop member 5 is mounted on the shaft S and is fixed thereto by a screw 6. A coil spring 4 is resiliently interposed between the movable pulley part 3 and the stop member 5 in such a manner that the ends of the spring 4 are held, respectively, in the groove 3' and in an annular recess formed in the stop member 5. Hence, the movable pulley part 3 is urged in the axial direction, towards the pulley part 1, by the coil spring.

Referring also to Figure 5, holes 7 and 7' are formed in the ends of the spring 4. A pin 8 protrudes from the bottom of the annular groove 3', and similarly a pin 8' protrudes from the bottom of the annular recess in the stop member 5. The pins 8 and 8' are inserted into the holes 7 and 7', respectively, and thereby lock the spring 4 to the pulley part 3 and the stop member 5. In this embodiment, the holes 7 and 7' are located 180° apart around the longitudinal axis of the spring 4.

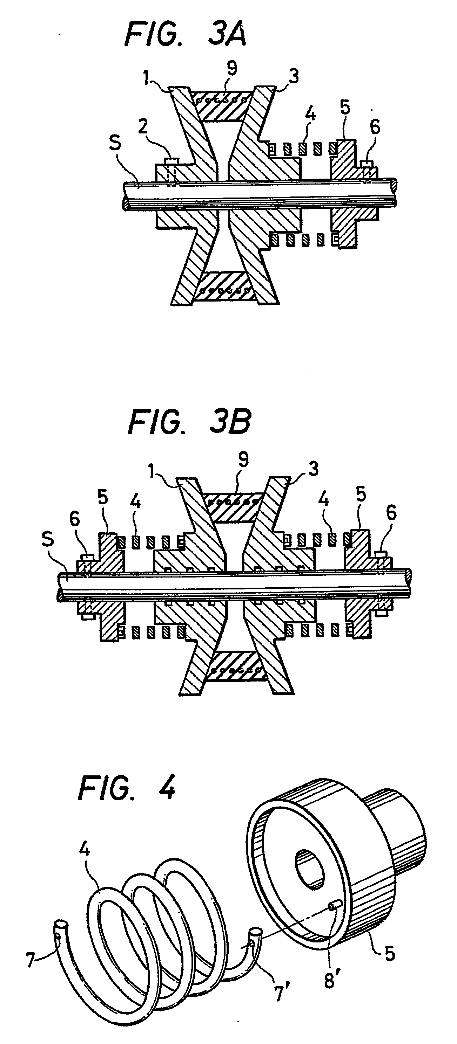

The coil spring 4 shown in Figures 5, 6A and 6B is rectangular in section. However, the spring may alternatively be circular in section, shown in Figure 4. Of the two types, for given values of spring constant, effective diameter and free length, a spring of rectangular cross section is preferred because of its greater twisting rigidity, i.e. smaller helix angle, and because it can withstand large loads.

The operation of the variable-speed pulley thus constructed will be described.

When power is transmitted by the belt 9 laid in the V-groove formed by the two pulley parts 1 and 3, torque occurs between the pulley parts 1 and 3 in the forward or reverse direction. This torque is transmitted to the stop member 5 via the pin 8 protruding from the pulley part 3 and the pin 8' provided on the stop member and thence through the bolt 6 to the shaft S. Conversely, power can be transmitted from the shaft S to the belt 9. More specifically, the power can be transmitted from the shaft S, via the stop member 5, the pin 8', the spring 4, the pin 8, and the movable pulley part 3 to the belt 9.

As described above, one of the pulley parts forming the variable-speed pulley is movable and rotatable around the shaft, and the coil spring is interposed between the movable pulley part and the stop member by engagement between the holes and the pins. Accordingly, the belt can be positioned in a balanced state due to the resilient force of the spring, and the effective diameter of the present variable-speed pulley can be readily changed by adjusting the belt tension.

Furthermore, locking is effected by the pins protruding from the movable pulley part and the stop member being inserted into the holes in the ends of the coilspring, which locking action is effective both in the winding-up direction and in the unwinding direction of the coil spring, i.e. for both forward torque and reverse torque. Accordingly, the present variable-speed pulley can bear a load not only in the coil spring winding direction but also in the coil spring unwinding direction, so that the pulley has a wider range of use than the conventional pulley.

Since the protruding pins are inserted into the holes in the ends of the coil spring, the spring has no bent parts, and accordingly there is considerably less likelihood of breakage of the spring when the torque is transmitted through the coil spring repetitively in the forward and reverse direction. Hence, the present variable-speed pulley can be effectively employed in a variety of industrial fields, thereby increasing its range of application.

In the above-described example of Figure 6A, one of the pulley parts is fixed relative to the shaft and the other is movable. However, the variable-speed pulley may be modified so that both of the pulley parts are movable and have respective stop members, and respective coil springs are interposed therebetween. Such an arrangement is shown in Figure 6B whose manner of operation is analougous to that already described.

## Claims

1. A variable-speed pulley comprising two confronting pulley parts (1, 3) mounted on a shaft (S), at least one of the pulley parts being mounted on the shaft to be movable in an axial direction of the shaft and to be rotatable around the shaft; and, associated with the or each movable pulley part, a respective stop member (5) fixedly mounted on the shaft, and a coil spring (4) interposed between the movable pulley part and the stop member; the or each movable pulley part and the or each stop member having a respective pin (8, 8') protruding from confronting sides thereof and engaging with a respective end of the or each coil spring (4); characterised in that the or each coil spring (4) has a hole (7, 7') through each of its ends into which a respective one of the pins (8, 8') is inserted whereby, in operation, when a belt (9) drives, or is driven by, the pulley, so that the coil spring is rotated in a direction in which it is wound or in the direction opposite thereto, a torque in either direction is withstood.

2. A pulley as claimed in claim 1, wherein the coil spring (4) is rectangular in section.

3. A pulley as claimed in claim 1 or claim 2, wherein the holes (7, 7') are spaced apart by substantially 180° around the longitudinal axis of the spring.

## Patentansprüche

1. Verstellbare Riemenscheibe mit zwei auf einer Welle (S) sich gegenüberliegend montierten Scheibenteilen (1, 3), von denen mindestens eines der Scheibenteile so auf der Welle montiert ist, daß es in axialer Richtung der Welle bewegbar und um die Welle drehbar ist; mit einem fest auf der Welle montierten Feststellteil (5), das dem oder jedem beweglichen Scheibenteil zugeordnet ist und mit einer Spiralfeder (4), die zwischen dem beweglichen Scheibenteil und dem Feststellteil eingefügt ist; wobei das oder jedes bewegliche Scheibenteil und das oder jedes Feststellteil einen entsprechenden Stift (8, 8') aufweisen, der von ihren sich gegenüberliegenden Seiten absteht und mit einem entsprechenden Ende der oder jeder Spiralfeder (4) in Eingriff steht, dadurch gekennzeichnet, daß die oder jede Spiralfeder (4) durch jedes seiner Enden hindurch ein Loch (7, 7') aufweist, durch das der entsprechende Stift (8, 8') eingeführt ist, wodurch im Betriebszustand, d.h. wenn ein Riemen (9) die Scheibe antreibt oder durch sie angetrieben wird, so daß die Spiralfeder in eine Aufwickelrichtung oder in die hierzu entgegengesetzte Richtung gedreht wird, einem beliebig gerichteten Drehmoment widerstanden wird.

2. Riemenscheibe nach Anspruch 1, dadurch gekennzeichnet, daß die Spiralfeder (4) rechteckigen Querschnitt aufweist.

3. Riemenscheibe nach Anspruch 1 oder 2, dadurch gekennzeichnet, daß die Löcher (7, 7') im wesentlichen um 180° um die Längsachse der Feder auseinander liegen.

**Revendications**

1. Poulie expansible à vitesse variable, comprenant deux des flasques (1, 3) montés face à face sur un arbre (S) au moins l'un des flasques étant mobile dans le sens de l'axe de l'arbre et en rotation autour de lui, ainsi que, combiné au flasque mobile ou à chaque flasque mobile de la poulie, un élément d'arrêt (5) correspondant, lequel est câlé sur l'arbre et un ressort hélicoïdal (4) interposé entre le flasque mobile et l'élément d'arrêt, le flasque mobile ou chaque flasque mobile et l'élément d'arrêt ou chaque élément d'arrêt portant une tige (8, 8') faisant saillie de faces dirigées l'une vers l'autre, les tiges étant reliées chacune à une extrémité correspondante du ressort hélicoïdal (4) ou de chaque ressort hélicoïdal, caractérisée en ce que chacune des extrémités du ressort hélicoïdal (4) ou de chaque ressort hélicoïdal présente un trou (7, 7') dans lequel est insérée une tige (8, 8') correspondante, si bien que, pendant le fonctionnement, lorsqu'une courroie (9) entraîne la poulie ou est entraînée par la poulie, de sorte que le ressort hélicoïdal est tourné dans le sens de son enroulement ou dans le sens contraire, un couple résistant est créé dans un sens ou dans l'autre.

2. Poulie selon la revendication 1, dans laquelle le ressort hélicoïdal (4) possède une section droite rectangulaire.

3. Poulie selon la revendication 1 ou 2, dans laquelle les trous (7, 7') sont mutuellement espacés d'environ 180° autour de l'axe longitudinal du ressort.

FIG. 1

FIG. 2A

FIG. 2B

## FIG. 3A

## FIG. 3B

## FIG. 4

FIG. 5

FIG. 6A

FIG. 6B